# FASCICULE DE BREVET EUROPEEN

(11) **EP 0 497 645 B1**
(45) Date de publication et mention de la délivrance du brevet: **01.05.1996**
(21) Numéro de dépôt: 92400106.8
(22) Date de dépôt: 15.01.1992
(51) Int. Cl.: B60S 1/04, B60S 1/50

(54) **Platine d'essuie-glace à réceptacle de liquide**
Scheibenwischerhalterung mit Flüssigkeitsbehälter
Windscreen wiper mounting with liquid reservoir

(30) Priorité: 17.01.1991 FR 9100500
(43) Date de publication de la demande: 05.08.1992
(73) Titulaire: VALEO SYSTEMES D'ESSUYAGE, F-78180 Montigny-Le-Bretonneux (FR)
(72) Inventeur: Eustache, Jean-Pierre, F-92160 Antony (FR)
(74) Mandataire: Gamonal, Didier

(56) Documents cités:
- EP-A- 0 443 934
- DE-A- 2 329 118
- DE-A- 3 308 466
- DE-U- 8 812 550
- FR-A- 1 368 673
- FR-A- 2 609 437
- FR-A- 2 613 303
- FR-A- 2 681 287
- GB-A- 1 161 868
- GB-A- 2 061 710
- GB-A- 2 218 622

## Description

La présente invention se rapporte à une platine d'essuie-glace à réceptacle de liquide, notamment pour véhicule automobile.

Une platine d'essuie-glace est généralement constituée d'une structure supportant un moto-réducteur d'essuie-glace transmettant son mouvement de rotation soit directement, soit par l'intermédiaire d'un mécanisme de transmission constitué de bielles, à au moins un arbre d'entraînement d'un dispositif d'essuie-glace constitué généralement d'un bras d'essuie-glace et d'un balai d'essuie-glace.

Comme décrit dans la demande de certificat d'utilité FR-U-2 621 287 correspondant au modèle d'utilité allemand DE-U-8 812 550.5, une telle platine est constituée d'une structure formée d'une tringle de longueur prédéterminée comportant à chacune de ses extrémités un palier servant de support à l'arbre d'entraînement du dispositif d'essuie-glace, et/ou de moyens de fixation de l'ensemble ainsi constitué sur un élément fixe de la carrosserie du véhicule automobile.

Habituellement, un réceptacle de liquide, tel qu'un bocal de lave-glace, contenant un liquide de lave-glace, est disposé à distance de cette platine, généralement dans le compartiment moteur du véhicule dans un endroit accessible pour son éventuel contrôle et/ou remplissage, et est relié à des organes distributeurs de ce liquide, tels que des gicleurs projetant ce liquide sur une surface vitrée, telle qu'un pare-brise de véhicule automobile, par un ensemble de tuyaux et d'appareils permettant cette distribution.

Dans cette configuration, les organes distributeurs de fluide sur le pare-brise sont situés à proximité de l'arbre d'entraînement du dispositif d'essuie-glace et il est nécessaire de relier ces organes distributeurs au bocal de lave-glace par une multiplicité de tuyaux ou d'appareillages d'entraînement qui nécessitent, d'une part des opérations compliquées de montage sur la chaîne de montage, et d'autre part un coût assez élevé du fait de la longueur des divers tuyaux utilisés.

Dans le document FR-A-2 609 437 il est connu d'utiliser un réceptacle muni d'une rainure de fixation apte à coopérer avec une canalisation.

Ce dispositif n'est utilisé que pour le chauffage du liquide contenu dans le bocal par échange thermique avec le fluide circulant dans la canalisation.

La présente invention se propose de remédier aux inconvénients ci-dessus mentionnés en proposant une platine d'essuie-glace à réceptacle de liquide de lave-glace de conception très simple qui inclura le positionnement et le maintien d'un réceptacle de liquide tel qu'un bocal de lave-glace sur celle-ci de façon à diminuer les opérations de montage sur la chaîne ainsi que les longueurs de tuyaux utilisés.

Selon l'invention, un ensemble d'au moins un réceptacle de liquide et d'une platine d'essuie-glace, notamment pour véhicule automobile, la platine présentant une structure constituée par une pluralité d'éléments de support en forme de tringles portant au moins un palier (Ensemble du type divulgué, par exemple, dans FR-U-2 621 287) est cet ensemble étant caractérisé en ce que le réceptacle de liquide porte une rainure de clipsage apte à coopérer avec l'un au moins des éléments de la structure pour porter ledit réceptacle.

Grâce à cette disposition, un ensemble monobloc est obtenu et comporte non seulement la platine support d'entraînement du dispositif d'essuie-glace, mais aussi au moins un réceptacle, ici un bocal de lave-glace. Des modes de réalisation sont précisés dans les revendications 2 à 15 dépendantes.

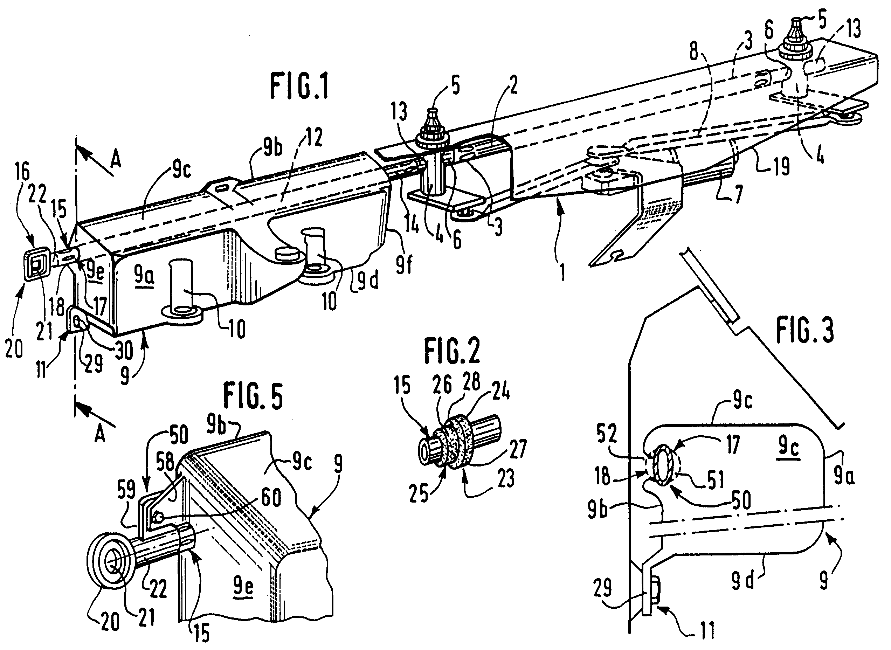

Les autres caracteristiques et avantages vont ressortir maintenant de la description qui va suivre en se référant aux dessins annexés sur lesquels :
- la figure 1 est une vue en perspective montrant la platine d'essuie-glace suivant la présente invention ;
- la figure 2 est une vue de détail à grande échelle d'un élément de la platine d'essuie-glace suivant l'invention;
- la figure 3 est une vue partielle en coupe partielle selon la ligne AA de la figure 1 ;
- la figure 4 est une vue en perspective montrant une variante de réalisation de la platine d'essuie-glace selon l'invention ;
- la figure 5 est une vue à plus grande échelle de détail d'un élément constitutif de la platine d'essuie-glace selon l'invention ;
En se référant maintenant au dessin de la figure 1, la platine d'essuie-glace comporte une structure porteuse 1 constituée dans l'exemple de la figure 1 par un élément porteur 2 en forme de tringle creuse, ici de forme circulaire, portant ici à chacune de ses extrémités 3 un palier 4 apte à porter l'arbre d'entraînement 5 relié de manière fixe à un dispositif d'essuie-glace (non représenté) constitué généralement d'un bras d'essuie-glace portant à articulation un balai d'essuie-glace.

Le palier 4 présente une forme tubulaire dans laquelle vient se loger l'arbre d'entraînement 5, cette forme tubulaire étant disposée sensiblement orthogonalement à la direction longitudinale de la tringle 2 ; ledit palier comporte un premier appendice saillant 6 venant coopérer avec l'extrémité 3 de la tringle 2 en correspondance en étant relié à celle-ci par tous moyens appropriés, tels que rivetage, sertissage ou vissage.

Le palier 4 peut comporter, si nécessaire, des moyens de fixation sur la carrosserie du véhicule automobile (ici non représentés) pouvant être, soit une oreille saillante prévue à partir de ce palier et comportant une ouverture traversée par une vis de fixation, soit un sytème de fixation par vissage du palier à travers des ouvertures prévues dans la carrosserie par l'intermédiaire d'un écrou.

La structure ainsi définie porte, de manière connue en soi, un moto-réducteur d'essuyage 7 transmettant son mouvement de rotation alternatif ou continu soit directement à l'arbre d'entraînement 5, soit par l'intermédiaire d'un mécanisme de transformation de mouvement tel qu'un mécanisme à bielles 8.

La structure 1 de la platine d'essuie-glace est adaptée à porter un réceptacle de liquide tel qu'un bocal de lave-glace 9 qui peut être directement porté par la tringle 2.

Dans l'exemple de la figure 1, le bocal de lave-glace 9 constitué par une enveloppe creuse de forme générale parallélépipédique présentant deux grandes faces sensiblement verticales 9a, 9b, deux grandes faces horizontales 9c, 9d et deux faces latérales 9e, 9f, l'une des grandes faces 9a portant des logements 10 aptes à recevoir un organe d'actionnement du circuit de lave-glace tel qu'une pompe de lave-glace et les faces 9b, 9d portant des moyens de fixations 11 sur la carrosserie, est apte à être porté par une tringle additionnelle 12 supportée par la structure 1 précédemment définie, la tringle additionnelle 12 et la structure 1 précédemment définie formant dans ce cas la platine d'essuie-glace.

Plus précisément, il est prévu qu'au moins un palier 4 présente une protubérance 13 disposée diamètralement opposée à l'appendice 6 en étant sensiblement de la même dimension et de la même forme que celui-ci, et dans le cas de la figure 1, il est prévu que chaque palier 4 comporte une protubérance 13 opposée à l'appendice 6, disposition qui sera explicitée par la suite.

Ainsi, sur la protubérance 13 est rapportée une extrémité 14 de la tringle additionnelle 12 constituée ici d'une forme tubulaire circulaire de longueur prédéterminée, l'extrémité 14 de la tringle 12 en regard de la protubérance 13 venant s'engager autour de cette protubérance pour être reliée à celle-ci de manière fixe et rigide, telle que rivetage, sertissage ou vissage.

L'autre extrémité 15 de la tringle additionnelle 12 présente un moyen de liaison et/ou de fixation 16 avec la carrosserie du véhicule automobile.

Sur cette tige additionnelle est rapporté, par exemple par assemblage à coopération de forme, dit clipsage, le bocal de lave-glace 9 qui présente sur l'une de ses faces en regard de cette tringle plus précisément sur la face 9b une rainure longitudinale 17 présentant une face ouverte 18 en regard de la tringle et débouchant de part et d'autre de la dimension longitudinale dudit bocal (figure 3).

De préférence, la rainure longitudinale 17 présente en section une forme complémentaire à celle de la section transversale de la tringle additionnelle 12 de manière à obtenir un assemblage par coopération de formes.

Ainsi la platine d'essuie-glace comme défini précédemment représente un module complet intégrant la structure porteuse du mécanisme d'entraînement du dispositif d'essuie-glace ainsi que le support du bocal de lave-glace et le bocal lui-même.

Cette platine d'essuie-glace peut être ainsi appliquée à des véhicules avec conduite à droite ou à des véhicules avec conduite à gauche.

Ainsi, il suffit de changer la position géographique de la tringle additionnelle 12 portant le bocal de lave-glace par rapport à la structure 1 pour obtenir une position souhaitée de ce sous-ensemble en fonction du type de conduite envisagé c'est-à-dire conduite à droite ou conduite à gauche.

En effet, il suffit simplement de raccorder l'extrémité correspondante de la tringle additionnelle soit sur le palier 4 tel que cela est montré à la figure 1, soit sur le palier 4 disposé à droite de la figure 1 et d'intervertir les moyens de fixation 16 ainsi correspondants pour constituer un autre type de conduite.

Bien entendu, et cela sans nuire au fonctionnement de l'ensemble, et pour des raisons d'esthétique, il peut être prévu que la structure porteuse 1 soit recouverte par un cache 19 venant recouvrir les paliers 4, la tringle 2, le moto-réducteur 7 et le mécanisme de transformation de mouvement éventuel 8.

Les moyens de liaison et/ou de fixation 16 de la tringle additionnelle 12 sur la carrosserie peuvent être une oreille 20 portant une ouverture 21 à travers laquelle est introduit tout moyen de fixation tel qu'une vis, ladite oreille 20 étant reliée à l'extrémité 15 de la tringle additionnelle 12 par l'introduction partielle d'une saillie 22 que présente cette oreille à l'intérieur de l'extrémité creuse 15 et par fixation de ces parties par tous moyens tels que sertissage, rivetage, vissage.

En se référant à la figure 2, les moyens de liaison et/ou de fixation 16 sont constitués par un élément amortisseur de vibrations 23 comportant au niveau de la liaison avec la carrosserie du véhicule automobile un élément élastique 24 permettant d'absorber les éventuelles vibrations.

L'élément élastique 24 se présente sous la forme d'un manchon 25 entourant l'extrémité 15 de la tringle additionnelle 12.

Ce manchon se compose d'un premier fourreau 26 s'appuyant sur la périphérie externe de la tringle et se poursuivant par un deuxième fourreau 27, de plus grand diamètre que le premier fourreau, en formant un épaulement 28 dirigé vers l'extrémité libre de la tringle 12.

Ainsi, pour la fixation de la platine ainsi constituée, celle-ci est fixée, dans le premier cas, par les oreilles prévues sur les paliers 4 et sur la tringle additionnelle 12 et par les moyens de fixation 11 prévus sur le bocal de lave-glace 9 et constitués dans le cas des figures 1 et 3 par une patte saillante 29 pourvue d'une ouverture 30 à travers laquelle est introduit tout moyen de fixation, tel qu'une vis (figure 3) ou, dans le deuxième cas, par introduction de l'extrémité 15 de la tringle 12 portant le manchon 25 dans une ouverture correspondante prévue dans la carrosserie de manière à ce que le premier fourreau 26 vienne en contact périphérique avec le bord circulaire de ladite ouverture alors que l'épaulement 28 entre le premier et deuxième fourreau vient s'appuyer sur la face de la carrosserie entourant cette ouverture puis l'ensemble de la platine est fixé sur ladite carrosserie par l'intermédiaire des oreilles prévues sur les paliers 4 et des moyens de fixation 11 du bocal 9.

Il a été fait mention jusqu'à maintenant d'une rainure longitudinale 17 prévue sur l'une des faces du bocal de lave-glace et qui dans le cas de la figure 1 est située sur la face arrière 9b du bocal 9 en considérant la figure 1, mais il peut être envisagé que cette rainure soit située sur la face supérieure 9c de ce bocal en étant également clipsée par enfoncement de la rainure autour de la tringle 12.

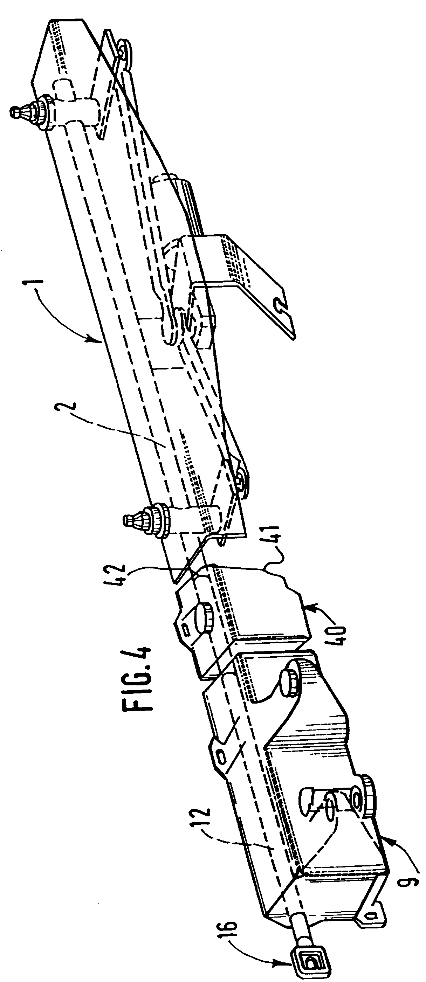

En se référant maintenant à la figure 4, il est prévu de disposer sur la tringle additionnelle 12 un deuxième réceptacle 40 de liquide, par exemple un réceptacle apte à contenir le liquide de frein utilisé dans le circuit de freinage du véhicule automobile.

Comme visible sur la figure 4, le deuxième réceptacle, considéré ici comme le réservoir de liquide de frein, présente également une enveloppe creuse 41 portée par clipsage, comme le bocal 9, par la tringle 12 en présentant une rainure longitudinale 42 et en étant disposée à côté du bocal de lave-glace 9.

Bien entendu le réservoir 40 porte éventuellement des moyens de fixation sur la carrosserie du véhicule et/ou sur le bocal 9 et ce réservoir peut être monobloc avec ledit bocal.

De plus il peut être prévu de faire porter le bocal 9 par la tringle 12 et le réservoir 40 par la tringle 2 de la structure 1 ou inversement.

De même il peut être prévu que le bocal 9 et le réservoir 40 soient portés par la tringle 2, par exemple par clipsage.

En se reportant aux figures 3 et 5, il est prévu que le réceptacle 9 et/ou 40 comporte un moyen d'immobilisation en rotation 50 du ou des réceptacles par rapport à la tringle 2 ou 12 qui le ou les porte.

Pour des mesures de simplification de la description, seul sera considéré dans la suite de la description le bocal de lave-glace 9 clipsé sur une tringle 12 ou 2 mais cette description est applicable également au réservoir de liquide 40 clipsé sur la tringle 2 ou sur la tringle 12.

En référence avec la figure 3, il est envisagé que la section de la tringle qui porte le bocal, en l'occurrence ici la tringle 12, soit une section non circulaire 51, telle qu'une forme ovale ou oblongue et cela sur une longueur au moins égale à la longueur du bocal et que la rainure 17 portée par le bocal présente également une section non circulaire complémentaire et sensiblement identique à la section de la tringle 12.

De même et en gardant la section non circulaire 51 de la tringle 12, il est prévu que la rainure 17 soit une rainure en section de forme circulaire 52, schématisée sur la figure par un trait interrompu, dont le périmètre est sensiblement égal au périmètre de la section non circulaire de la tringle 12 et qu'il soit tiré profit de la constitution de la matière du bocal qui présente une certaine élasticité de manière à ce que, lors du clipsage, la rainure 17 se déforme, en section, pour épouser la forme de la section 51 de la tringle 12 en immobilisant ainsi en rotation le bocal par rapport à la tringle.

Dans le cas de la figure 5, les moyens d'immobilisation en rotation 50 consistent en une patte 58 saillante à partir de la face du bocal située du côté de l'extrémité 15 de la tringle 12 et qui vient s'appuyer sur une patte 59 saillante orthogonale à partir de la saillie 22.

De préférence les deux pattes 58, 59 sont reliées l'une à l'autre par tout moyen tel qu'une vis 60 de manière à assurer l'immobilisation en rotation du bocal par rapport à la tringle.

Bien entendu et cela sans sortir du cadre de l'invention, il peut être prévu que la tringle additionnelle 12 précédemment décrite soit montée à pivotement autour d'un palier 4 par un moyen de rotation adéquat disposé à l'une de ses extrémités telle qu'une paroi tubulaire et que l'autre de ses extrémités porte un moyen d'immobilisation, cette tringle additionnelle 12 portant les réceptacles de liquide 9, 40.

La présente invention n'est pas limitée aux exemples de réalisation décrits ci-dessus mais englobe toutes variantes, tant qu'elles demeurent définies par les revendications.

## Revendications

1. Ensemble d'au moins un réceptacle de liquide (9,40) et d'une platine d'essuie-glace, notamment pour véhicule automobile, la platine présentant une structure (1) constituée par une pluralité d'éléments de support en forme de tringles (2,12) portant au moins un palier (4), ensemble caractérisé en ce que le réceptacle de liquide (9,40) porte une rainure (17,42) de clipsage apte à coopérer avec l'un au moins des éléments (2,12) de la structure (1) pour porter ledit réceptacle (9,40).

2. Ensemble selon la revendication 1, caractérisée en ce que le réceptacle de liquide (9,40) est porté par la tringle (2).

3. Ensemble selon l'une des revendications précédentes, caractérisée en ce que le réceptacle de liquide est porté par une tringle additionnelle (12).

4. Ensemble selon la revendication 3, caractérisée en ce que la tringle additionnelle (12) est raccordée à l'un des paliers (4).

5. Ensemble selon l'une des revendications précédentes, caractérisée en ce que le réceptacle de liquide (9,40) est porté par le palier (4).

6. Ensemble selon l'une des revendications précédentes, caractérisée en ce que le réceptacle de liquide (9,40) porte des moyens de limitation en rotation (50) par rapport à la tringle (2,12).

7. Ensemble selon la revendication 6, caractérisée en ce que les moyens limitant la rotation (50) sont constitués par une patte (59) prévue à partir de la tringle (2,12) et coopérant avec une patte (58) prévue à partir du réceptacle de liquide (9,40).

8. Ensemble selon l'une des revendications 6 ou 7, caractérisée en ce que les moyens limitant la rotation (50) sont constitués par une forme non circulaire prévue à la fois sur la tringle (2,12) et dans une rainure (17,42) du réceptacle de liquide (9,40).

9. Ensemble selon l'une des revendications 6 à 8, caractérisée en ce que les moyens limitant la rotation (50) sont constitués par un cavalier (53) coopérant avec la tringle (12) et le réceptacle de liquide (9,40).

10. Ensemble selon l'une des revendications précédentes, caractérisée en ce que le réceptacle de liquide (9,40) est porté par au moins une patte (59,61) issue de la structure (1).

11. Ensemble selon l'une des revendications précédentes, caractérisée en ce que la tringle additionnelle (12) présente un moyen de liaison et/ou de fixation (16) avec la carrosserie du véhicule automobile.

12. Ensemble selon la revendication 11, caractérisée en ce que le moyen de liaison et/ou de fixation est une liaison fixe et rigide (20,21).

13. Ensemble selon la revendication 11, caractérisée en ce que le moyen de liaison est une liaison souple (19,20).

14. Ensemble selon l'une des revendications précédentes, caractérisée en ce que le réceptacle (9) est un bocal de lave-glace.

15. Ensemble selon l'une des revendications précédentes, caractérisée en ce que le réceptacle de liquide (40) est un bocal de liquide de frein.

## Claims

1. An assembly of at least one receptacle (9,40) for liquid with a screen wiper base unit, especially for motor vehicles, the base unit having a structure (1) comprising a plurality of support elements in the form of bars (2,12) carrying at least one bearing (4), the assembly being characterised in that the liquid receptacle (9,40) carries a clipping grove (17,42) adapted to cooperate with at least one of the elements (2,12) of the structure (1) so as to carry the said receptacle (9,40).

2. An assembly according to Claim 1, characterised in that the liquid receptacle (9,40) is carried by the bar (2).

3. An assembly according to one of the preceding Claims, characterised in that the liquid receptacle is carried by an additional bar (12).

4. An assembly according to claim 3, characterised in that the additional bar (12) is connected to one of the bearings (4).

5. An assembly according to one of the preceding Claims, characterised in that the liquid receptacle (9,40) is carried by the bearing (4).

6. An assembly according to one of the preceding Claims, characterised in that the liquid receptacle (9,40) carries means (50) for limiting its rotation with respect to the bar (2,12).

7. An assembly according to Claim 6, characterised in that the rotation limiting means (50) comprise a lug (59) projecting from the bar (2,12) and cooperating with a lug (58) projecting from the liquid receptacle (9,40).

8. An assembly according to Claim 6 or Claim 7, characterised in that the rotation limiting means (50) are defined by a non-circular profile formed both on the bar (2,12) and in a grove (17,42) of the liquid receptacle (9,40).

9. An assembly according to one of Claims 6 to 8, characterised in that the rotation limiting means (50) comprise a horseshoe element cooperating with the bar (12) and the liquid receptacle (9,40).

10. An assembly according to one of the preceding Claims, characterised in that the liquid receptacle (9,40) is carried by at least one lug (59,61) projecting from the structure (1).

11. An assembly according to one of the preceding Claims, characterised in that the additional bar (12) has a means (16) for connecting and/or fastening it to the bodywork of the motor vehicle.

12. An assembly according to Claim 11, characterised in that the connecting and/or fastening means is a fixed and rigid connection (20,21).

13. An assembly according to Claim 11, characterised in that the connecting means is a flexible connection (19,20).

14. An assembly according to one of the preceding Claims, characterised in that the receptacle (9) is a screen washer fluid bottle.

15. An assembly according to one of the preceding Claims, characterised in that the liquid receptacle (40) is a brake fluid bottle.

## Patentansprüche

1. Einheit aus wenigstens einem Flüssigkeitsbehälter (9,40) und einer Scheibenwischerhalterung, insbesondere für Kraftfahrzeuge, wobei die Halterung eine Struktur (1) aufweist, die aus einer Mehrzahl von Halterungselementen in Form von Stangen (2, 12) besteht, die wenigstens ein Lager (4) tragen , **dadurch gekennzeichnet,** daß der Flüssigkeitsbehälter (9, 40) eine Aufklemmnut (17, 42) aufweist, die mit wenigstens einem der Elemente (2, 12) der Struktur (1) zur Halterung des besagten Behälters (9, 40) zusammenwirken kann.

2. Einheit nach Anspruch 1**, dadurch gekennzeichnet,** daß der Flüssigkeitsbehälter (9, 40) an der Stange (2) angebracht ist.

3. Einheit nach einem der vorangehenden Ansprüche, **dadurch gekennzeichnet,** daß der Flüssigkeitsbehälter (9, 40) an einer Zusatzstange (12) angebracht ist.

4. Einheit nach Anspruch 3, **dadurch gekennzeichnet,** daß die Zusatzstange (12) an einem der Lager (4) angeschlossen ist.

5. Einheit nach einem der vorangehenden Ansprüche, **dadurch gekennzeichnet,** daß der Flüssigkeitsbehälter (9, 40) an dem Lager (4) angebracht ist.

6. Einheit nach einem der vorangehenden Ansprüche, **dadurch gekennzeichnet,** daß am Flüssigkeitsbehälter (9, 40) Mittel zur Drehbegrenzung (50) im Verhältnis zur Stange (2, 12) angebracht sind.

7. Einheit nach Anspruch 6, **dadurch gekennzeichnet,** daß die Drehbegrenzungsmittel (50) aus einem Ansatz (59) bestehen, der an der Stange (2, 12) vorgesehen ist und mit einem Ansatz (58) zusammenwirkt, der am Flüssigkeitsbehälter (9, 40) vorgesehen ist.

8. Einheit nach einem der Ansprüche 6 oder 7 , **dadurch gekennzeichnet,** daß die Drehbegrenzungsmittel (50) aus einer nicht kreisförmigen Form bestehen, die sowohl an der Stange (2, 12) als auch in einer Nut (17, 42) des Flüssigkeitsbehälters (9, 40) vorgesehen ist.

9. Einheit nach einem der Ansprüche 6 bis 8 , **dadurch gekennzeichnet,** daß die Drehbegrenzungsmittel (50) aus einem Anschlag (53) bestehen, der mit der Stange (12) und mit dem Flüssigkeitsbehälter (9, 40) zusammenwirkt.

10. Einheit nach einem der vorangehenden Ansprüche, **dadurch gekennzeichnet,** daß der Flüssigkeitsbehälter (9, 40) an wenigstens eincm Ansatz (59, 61) angebracht ist, der von der Struktur (1) ausgeht.

11. Einheit nach einem der vorangehenden Ansprüche, **dadurch gekennzeichnet,** daß die Zusatzstange (12) ein Mittel (16) zur Verbindung und/oder Befestigung an der Karosserie des Kraftfahrzeugs aufweist.

12. Einheit nach Anspruch 11 , **dadurch gekennzeichnet,** daß es sich bei dem Verbindungs- und/oder Befestigungsmittel um eine feste und starre Verbindung (20, 21) handelt.

13. Einheit nach einem der vorangehenden Ansprüche, **dadurch gekennzeichnet,** daß es sich bei dem Verbindungsmittel um eine biegsame Verbindung (19, 20) handelt.

14. Einheit nach einem der vorangehenden Ansprüche, **dadurch gekennzeichnet,** daß der Behälter (9) ein Scheibenwaschbehälter ist.

15. Einheit nach einem der vorangehenden Ansprüche, **dadurch gekennzeichnet,** daß der Flüssigkeitsbehälter (40) ein Bremsflüssigkeitsbehälter ist.
